# EUROPEAN PATENT APPLICATION

(11) **EP 2 296 386 A1**
(43) Date of publication of application: **16.03.2011**
(21) Application number: 10178421.3
(22) Date of filing: 22.05.2006
(51) Int. Cl.: H04W 4/12

(54) **Asynchronous media communications using priority tags**

(30) Priority: 20.05.2005 US 683269 P
(62) Divisional of application: 06760334.0
(71) Applicant: Qualcomm Incorporated, San Diego, CA 92121-1714 (US); Jaime, Manuel E., Solana Beach, CA 92075 (US)
(72) Inventor: Jones, Donald John, Cardiff, CA 92007 (US); Jain, Nikhil, Mendham, NJ 07945 (US); Murphy, Mark Kelly, Hillsboro, OR 97124 (US); Jaime Manuel E., Solana Beach, CA 92075 (US)
(74) Representative: O'Neill, Aoife

(57) **Abstract**

Asynchronous media communications (AMC) provided new modality for communications when regular voice calls are not appropriate and when text messaging is too complicated or fails to convey the proper emotion. AMC combines voice messaging with key innovative features such as tagging and threading of voice strings on a recipient device. Communication can take place on a one-to one or one-to-many basis.

## Description

### Claim of Priority under 35 U.S.C. §119

The present Application for Patent claims priority to Provisional Application No. 60/683,269, entitled "Asynchronous Media Communications," filed May 20, 2005, and assigned to the assignee hereof and hereby expressly incorporated by reference herein.

### BACKGROUND

In many cases, a regular voice call isn't appropriate and text messaging is too complicated and/or won't convey the right emotion. For example, a regular voice call cannot be answered, or may be inconvenient when the recipient cannot or is unwilling to be interrupted. When a user attempts to make a call in such situations, the user typically can leave a message. However, it may also be complicated, time consuming and inconvenient since the user must wait until the "beep" to even begin the message. Also, in some cases, a user may not want to make a call, but would rather leave a voice message. This situation can become very problematic.

### BRIEF DESCRIPTION OF THE DRAWINGS

FIG. 1 shows an example environment capable of implementing the AMC messaging.

FIG. 2 shows an example technique that allows an AMC message communication through a server.

FIG. 3 shows an example technique that allows an AMC message communication without a server.

FIG. 4 shows an example mobile device capable of sending a message.

FIG. 5 shows an example mobile device capable of receiving a message.

FIG. 6 shows an example server that allows AMC communication.

FIG. 7a shows an example I-Peer that allows AMC communication.

FIGs. 7b-7d illustrate an AMC basic call flow in a P2P architecture showing various aspects of sending data and receiving data.

FIGs. 8 and 9a show example displays of how a string of messages from multiple users be indexed and shared.

FIG. 9b illustrates an ANC call flow having a 3 party exchange with a message forwarded to a fourth party.

### DETAILED DESCRIPTION

Generally, a technique that allows users to send and/or receive messages is described. In order to solve the problems noted above, accordingly, an asynchronous media communication (AMC) messaging is described that allows users to send voice messages without the inconveniences of first making a call. AMC messaging allows originators of the AMC message to keep track of pending responses and/or allow recipients to remember to respond as necessary by implementing alerts and reminders. It allows other and various broad applications as will be disclosed.

In the following description, specific details are given to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, structures and techniques may be shown in detail in order not to obscure the embodiments.

Also, it is noted that the embodiments may be described as a process which is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

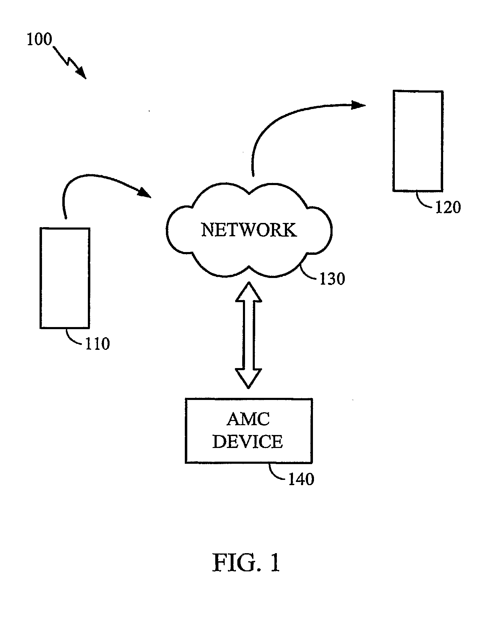

FIG. 1 shows an example environment 100 capable of implementing the AMC messaging. Environment 100 may comprise a first mobile device 110, a second mobile device 120, a network 130 and an AMC device 140. First mobile device 110 allows a user to send an AMC message to a user of second mobile device 120. The message is sent from first mobile device 110 to second mobile device 120 through network 130 and AMC device 140. Network 130 may be wireless or non-wireless network.

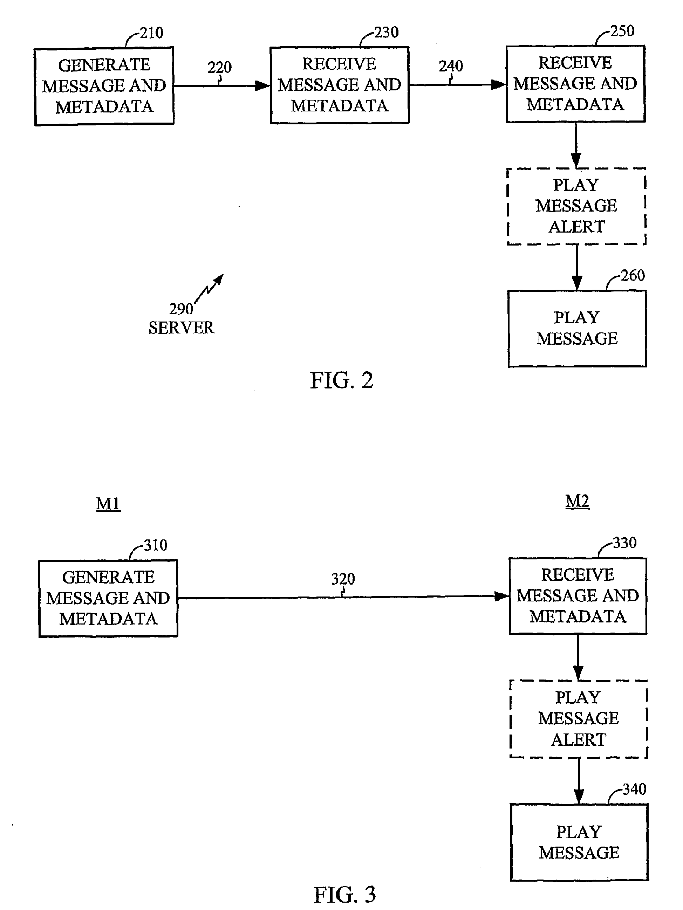

AMC device 140 may be a server that facilitates the message communication. FIG. 2 shows an example technique 200 that allows an AMC message communication through a server. In technique 200, a message is generated (210) at first mobile device M1. The user of M1 may assign a priority level for the message. Thus, the message is generated with corresponding metadata that may indicate the priority level. The message and metadata are sent (220) from M1 and received (230) by server 290 through network 130. Server forwards (240) the message and metadata to second mobile device M2. Server 290 may use a phone number associated with M2, an IP address associated with M2 or other protocols to forward the message and metadata to M2. M2 receives (250) the message and metadata. The message is then played (260). In an alternative embodiment, second mobile device M2 can be substituted for an application server. Thus, for instance, a mobile application can be the recipient of the messaging producing mobile to application messaging. This application messaging is useful for template - based applications (e.g., sales orders, scheduling, sending prescriptions, etc.) Prior to playing the message, M2 may play a message alert signal to notify the user that a message has been received. The message alert signal is played in accordance to the metadata. Once M2 learns that a message exists, M2 may generate the message alert and play the message alert. When the user is ready to view the message, M2 may play the message to the user. The message may be forwarded by server 290 to notify M2 that a message exists. Alternatively, the message may be stored in server 290 until M2 requests that the message be forwarded. Still alternatively, server 290 may generate the message alert and forward both the message and the message alert signal to M2. Prior to displaying the message, M2 may play the message alert to notify the user that a message exists. In another variation, server 290 may generate the message alert signal and forward the message alert signal to M2. M2 may play the message alert to notify the user that a message has been received. When the user is ready to view the message, server 290 may then forward the message to M2 for play to the user. Other variations may also be implemented to notify and play the message to the user of M2.

Since the message need not be viewed immediately, additional message alert signals may be played to remind the user that a message has been received.

The following should be noted that in the process of sending and receiving data:
1. The request uses the recipient's phone number.
3. The request is sent as an SMS with //brew option (a command according to a commonly know programming language (brew) for phones).
4. The sender and the receiver ma be authenticated using CDMA 200 authentication
5. Security keys may be exchanged over CDMA channels.
6. Data may be encrypted and sent over the data channels
7. When the recipient is not connected to the network, data can be stored on an indirect peer
8. Sending and receiving data does not require a mobile IP for reachability.

For example, after a given time period, M1 may send a monitoring signal to determine whether the message has been played. Server 290 may forward the monitoring signal to M2. If the message had been played, M2 may send a confirmation message and server 290 may forward the confirmation message to M1. Otherwise, M2 may play an additional message alert to remind the user that a message has been received and not yet viewed. If a confirmation message is not received, server 290 may assume that the message has not been viewed and would notify M1. Alternatively, M2 may affirmatively send a signal indicating that the message has not been viewed and server 290 may forward the signal to M1. After another given time period, M1 may again send a signal to determine whether the message has been played. Accordingly, M1 may monitor whether the message has been played. After a lapse of a given time period since the message has been sent, M1 may allow the user to send another message, with possibly a different assigned priority level. In the case that the message is stored in server 290, M1 may retract the message and send a new message.

In the above implementation, M1 monitors the message communication while server 290 acts as the go-between M1 and M2. Alternatively, server 290 may monitor whether a message has been played.

For example, after a given time period, server 290 may send a signal to M2 determine whether the message has been played. Here, M1 may be the one to initiate this signal and server 290 may then forward the signal to M2. If the message had been played, M2 may send a confirmation message to server 290. Otherwise, M2 may play an additional message alert to remind the user that a message has been received and not yet viewed. If a confirmation message is not received, server 290 may assume that the message has not been viewed. Server 290 may be configured to notify M1. Alternatively, M2 may affirmatively send a signal indicating that the message has not been viewed. After another given time period, server 290 may again send a signal to determine whether the message has been played. After a lapse of a given time period since the message has been sent, server 290 may send a signal to M1. The user may then send another message, with possibly a different assigned priority level. In the case that the message is stored in server 290, server 290 may allow M1 to retract the message and send a new message.

In the above implementations, M2 may be configured to send the confirmation when a monitoring signal is received. In other variations, M2 may be configured to send a confirmation message through server 290 to indicate that the message was played. In such cases, the monitoring signal may be sent after the given time period, if a confirmation signal is not received. Also, the given time periods may be varied based on users timeframes.

In still other variations, M2 may itself monitor whether a signal has been played. For example, after a given time period, if the message has not been played, M2 may play an additional message alert to remind the user that a message has been received and not yet viewed. After another given time period, M2 may again play another message alert to remind the user that a message has been received and not yet viewed. After a lapse of a given time period since the message has been sent, M2 may send a signal to server 290 and M1. The user of M1 may then send another message, with possibly a different assigned priority level. In the case that the message is stored in server 290, server 290 may allow M1 to retract the message and send a new message.

Accordingly, M1, M2 and server 290 may be implemented and configured to carry out various functions as described to monitor the message communication. However, it would be apparent to those skilled in the art that the functions and/or interactions of M1, M2 and/or server 290 are not limited to that described but may be modified and/or combined in different ways to monitor the message communication.

Moreover, in some environments, a server/client relationship may not be implemented. In such cases, a mobile device generates and sends an AMC message to another mobile device. This type of communication will be referred hereinafter as peer to peer (P2P) communication. FIG. 3 shows an example technique 300 that allows an AMC message communication without a server. In technique 300, a message is generated (310) at first mobile device M1. The user of M1 may assign a priority level for the message. Thus, the message is generated with corresponding metadata that may indicate the priority level. The message and metadata are sent (320) directly from M1 to M2 through network 130. M1 may use a phone number associated with M2, an IP address associated with M2 or other protocols to send the message and metadata to M2. For example, SMS may be used to facilitate the sending of the message and metadata. M2 receives (330) the message and metadata. The message is then displayed (340).

In situations when M2 is not within a network such that M1 cannot send a message, an indirect peer (I-peer) may be implemented. I-peers are available to store data for a mobile temporarily. They may be used, for example, when a mobile is unavailable to send a message. I-peers are not deployed by a carrier but rather are deployed my mobile phone users. For instance, a laptop can be an I-peer. For enterprise grade applications, an enterprise server can be set-up as an I-Peer and any user can use any peer, .i.e., extra effort is required to debar a particular user from peer usage. P2P APIs (Application programming interface) are defined to store and retrieve media and content and P2P mobiles and I-peers use the following per discovery protocol:
- Each mobile P2P client is configured with a default i-peer
- Each I-peer has a list of other I-peers
- An I-peer list is kept current by each I-peer through pinging other I-peers and by each I-peer exchanging lists of known I-peers. Any user can receive a list of close by I-peers so long as it knows at least one I-peer. I-Peer is also referred to as a "computer platform." Generally, however, M2 would have one or more assigned I-Peers such that when M2 is not within a network, the I-Peer would receive AMC messages. Thereafter, when M2 is within the network, I-Peer 390 may send any received AMC messages. An I-Peer may, for example, be a computer, such as a desktop computer, associated with the user of M2. It may be a one or more different mobile devices associated with M2 that temporarily holds the message, in either parallel or in a series, until M2 is within the network. It may also be a dedicated device with limited functions that services one or more M2s to temporarily store the message until the respective M2 is within the network.

Once M2 receives the message, either directly from M1 or through an I-Peer 390, M2 may play a message alert signal to notify the user that a message has been received. The message alert signal is played in accordance to the metadata. When the user is ready to view the message, M2 may play the message to the user. Since the message need not be viewed immediately, additional message alert signals may be played to remind the user that a message has been received.

For example, after a given time period, M1 may send a monitoring signal to determine whether the message has been played. If the message had been played, M2 may send a confirmation message to M1. Here, an I-Peer may be used to facilitate the communications between M1 and M2. If the message had not been played, M2 may play an additional message alert to remind the user that a message has been received and not yet viewed. If a confirmation message is not received, M2 may assume that the message has not been viewed. Alternatively, M2 may affirmatively send a signal indicating that the message has not been viewed. After another given time period, M1 may again send a signal to determine whether the message has been played. Accordingly, M1 may monitor whether the message has been played. After a lapse of a given time period since the message has been sent, M1 may allow the user to send another message, with possibly a different assigned priority level.

In the above implementation, M1 monitors the message communication. However, M2 may itself monitor whether a signal has been played. For example, after a given time period, if the message has not been played, M2 may play an additional message alert to remind the user that a message has been received and not yet viewed. After another given time period, M2 may again play another message alert to remind the user that a message has been received and not yet viewed. After a lapse of a given time period since the message has been sent, M2 may send a signal to M1. The user of M1 may then send another message, with possibly a different assigned priority level.

If an I-Peer is used, the I-Peer may also monitor the message communication. For example, after a given time period, I-Peer 390 may send a signal to M2 determine whether the message has been played. If the message had been played, M2 may send a confirmation message to I-Peer 390. Otherwise, M2 may play an additional message alert to remind the user that a message has been received and not yet viewed. If a confirmation message is not received, I-Peer 390 may assume that the message has not been viewed. I-Peer 390 may be configured to notify M1. Alternatively, M2 may affirmatively send a signal indicating that the message has not been viewed. After another given time period, I-Peer 390 may again send a signal to determine whether the message has been played. After a lapse of a given time period since the message has been sent, I-Peer 390 may send a signal to M1. The user may then send another message, with possibly a different assigned priority level.

In the above implementations, M2 may be configured to send the confirmation when a monitoring signal is received. In other variations, M2 may be configured to send a confirmation message to indicate that the message was played. In such cases, the monitoring signal may be sent after the given time period, if a confirmation signal is not received. Also, the given time periods may be varied based on users timeframes.

Accordingly, M1, M2 and I-Peer 390 may be implemented and configured to carry out various functions as described to monitor the message communication. However, it would be apparent to those skilled in the art that the functions of M1, M2 and/or I-Peer 390 are not limited to that described but may be modified and combined in different ways to monitor the message communication.

It should be noted that while techniques 200 and 300 show AMC communication from M1 to M2, an AMC message may be sent from M2 to M1. In such case, the operation would be opposite that of M1 to M2.

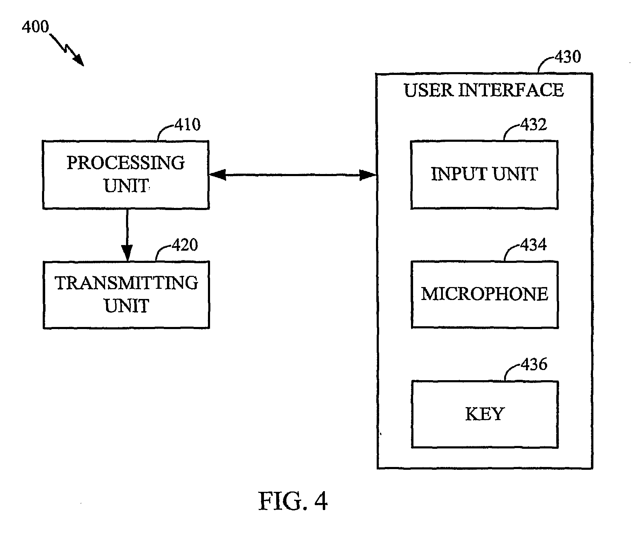

FIG. 4 shows an example mobile device 400 capable of sending a message. Mobile device 400 comprises a processing unit 410 and a transmitting unit 420. Mobile device 400 may also comprise a user interface 430 configured to receive input from a user. For example, user interface 430 may comprise an input unit 432, a microphone 434 and a key 436 that allows the user to formulate an AMC message and assign a priority level. If a user wishes to send an a voice AMC message, user may simply select the AMC message communication through input unit 432, engage key 436 and formulate the voice message through microphone 434. Mobile device 400 is configured to allow the user to send an AMC message without the delay of having to first make a connection and/or hearing the voice mail recording. The user would be allowed to assign a priority level before or after the message formulation through input unit 432. It would be apparent that other variations and/or modifications may be made to allow users to formulate an AMC message and assign a priority level. Processor 410 then generates an AMC message with metadata that indicates the priority level. The message and metadata are sent through transmitting unit 420.

It should be noted that mobile device 400 may comprise other elements. It may comprise a receiving unit that allows mobile device 400 to receive confirmation message signals or signals that a message has not been played. Processor 410 would control the receipt and processing of these messages. It may comprise a storage unit to store various programs and data for use in the AMC message communication. Moreover, it may comprise additional elements to allow wireless communication if the mobile device is a mobile phone.

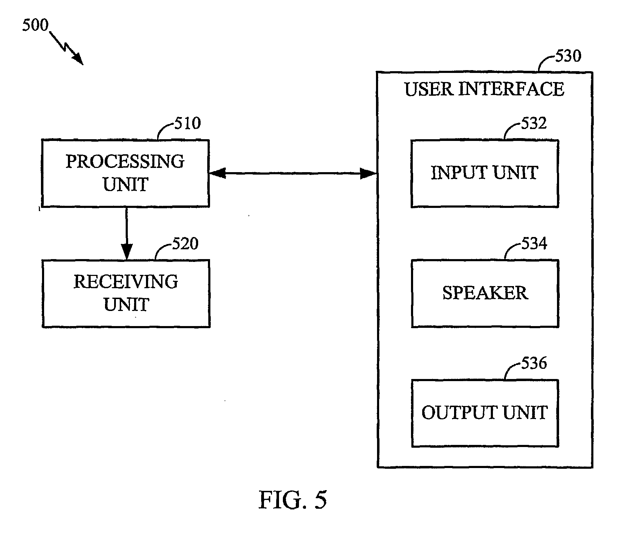

FIG. 5 shows an example mobile device 500 capable of receiving a message. Mobile device 500 comprises a processing unit 510 to control the playing of an AMC message and a receiving unit 520 that receives an AMC message with metadata. Mobile device 400 may also comprise a user interface 530 configured to receive input from a user. For example, user interface 530 may comprise an input unit 532, a speaker 534 and output unit 536 that allows the user to play an AMC message. If a user wishes to play a voice AMC message, user may simply select the AMC message communication through input unit 532 and play the message through speaker 534. Mobile device 500 is configured to allow the user to play the AMC message without the delay of having to first make a connection and/or manipulating the voice mail. As described above, since the message need not be viewed immediately, a message alert signal may be played through output unit 536 to notify the user that a message has been received. Here, the message alert signal is played in accordance to the metadata. Processor 510 also controls the playing of message alert signals.

For example, if output unit 536 is a display unit, the message alert signal would be displayed based on the information indicated by the metadata. The message alerts may also be displayed with one or a combination of other information such as the origination, location, subject, priority level, time period elapsed from message receipt, presence, length of the message, and whether the message has been played. The metadata can be obtained from the device status/state, network status/state or the input by the user who generated the message. For priority level, the message alerts can be color coded and displayed to indicate the different priority levels. The priority level may be displayed using a numeric, alphabetic or alphanumeric range. The priority level may be indicated by the order in which the message alerts are display. Furthermore, the priority level may be maintained, modified and/or updated based on the original assigned level and based on other factors. Such factors may include, but is not limited to, the time period elapsed from the message receipt, the type of message and the origination. The priority level may also be controlled by M2 or by a server if implemented, or by M1. The message alert may be displayed with various combinations of the above characteristics and/or other characteristics based on the associated metadata. It would be apparent that other variations and/or modifications may be made to allow users to play the message alert and AMC message.

It should be noted that mobile device 500 may comprise other elements. It may comprise a transmitting unit that allows mobile device 500 to send confirmation message signals or signals that a message has not been played. Processor 510 would control the processing and sending of these messages. It may comprise a storage unit to store various programs and data for use in the AMC message communication. Moreover, it may comprise additional elements to allow wireless communication if the mobile device is a mobile phone.

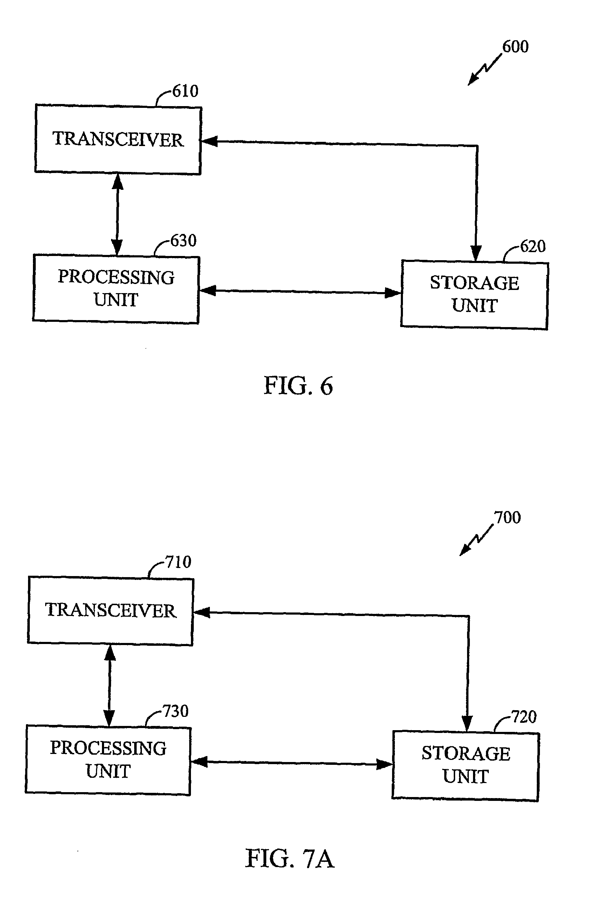

FIG. 6 shows an example server 600 that allows AMC communication. Server 600 comprises a transceiver 610 that receives AMC messages and corresponding metadata from originating mobile devices or origination, and forwards the AMC message and corresponding metadata to respective destination mobile device or destination. Transceiver 610 may also receive confirmation messages and other signals from the destination mobile devices, and forwards the messages to the respective origination mobile devices. The messages may be forwarded based on the appropriate protocols of the network, using information such as a phone number or IP address. Server 600 may also comprise a storage unit 620 that stores the AMC message before forwarding to the second mobile device. A processing unit 630 may control the operations of AMC communication. Server 600 may comprise other elements as necessary and/or may perform other functions such as, but not limited to, managing network resources and managing network traffic.

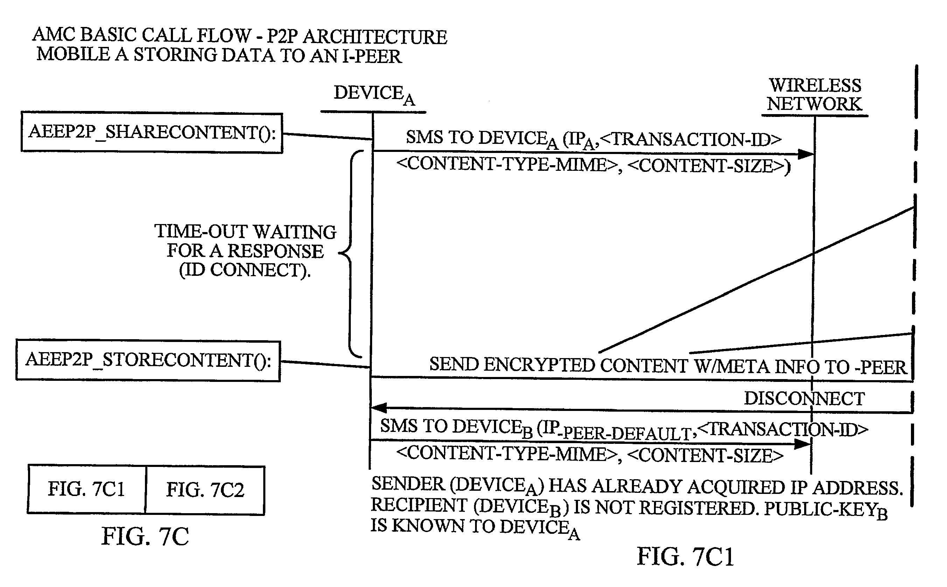

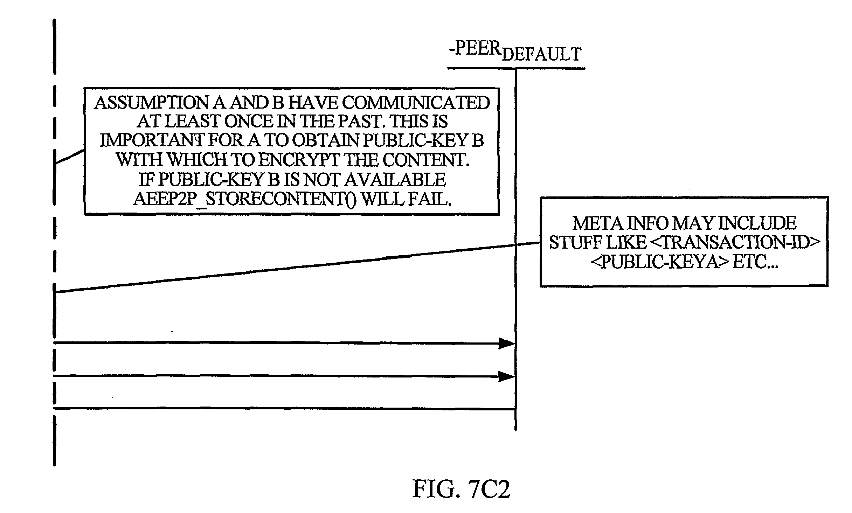

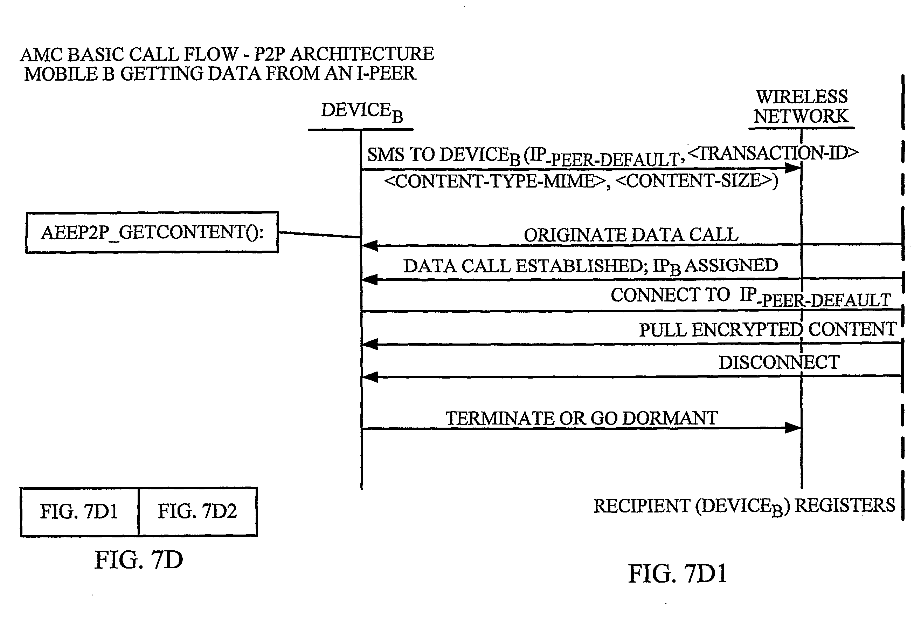

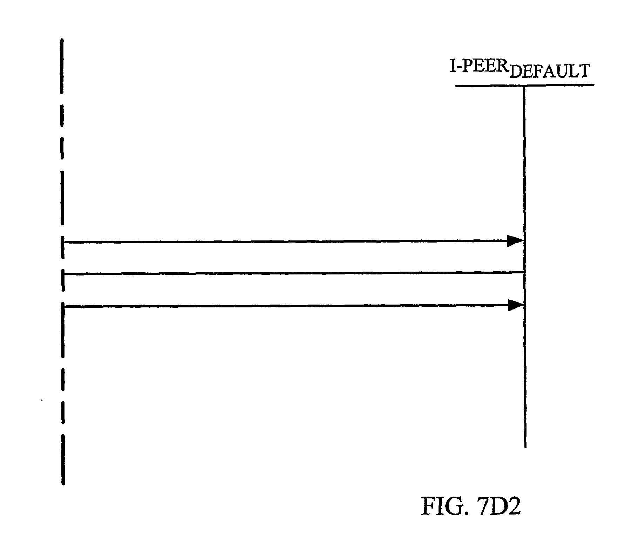

FIG. 7a shows an example I-Peer 700 that allows AMC communication. I-Peer 700 comprises a transceiver 710 that receives AMC messages and corresponding metadata from an origination mobile device. A storage unit 720 stores the message and metadata for a destination mobile device. When the destination mobile device can receive the message, transceiver 710 forwards the message and metadata to the destination mobile device. A processing unit 730 may control the receipt and transmittal of the message and metadata.

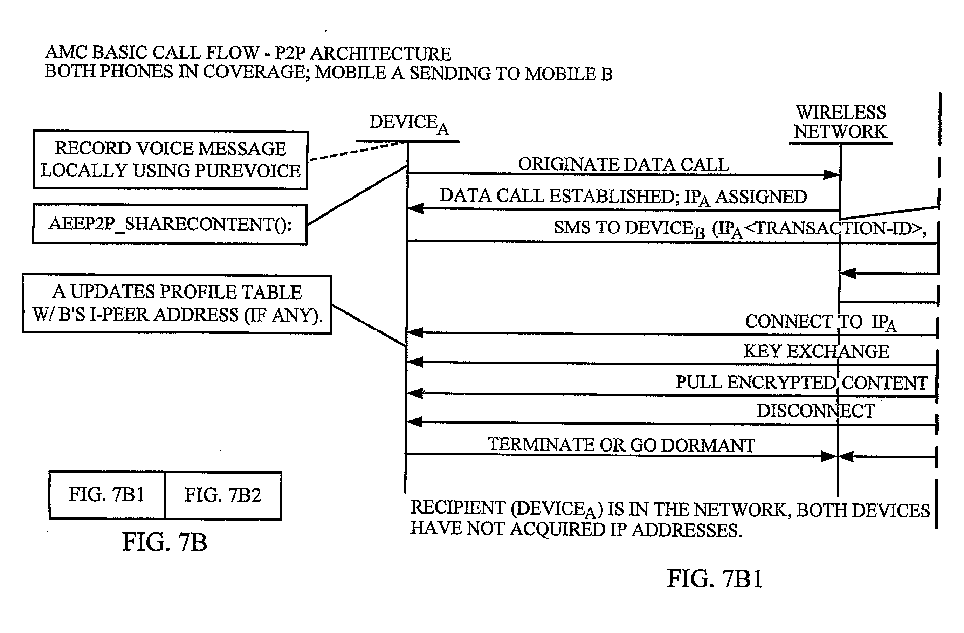

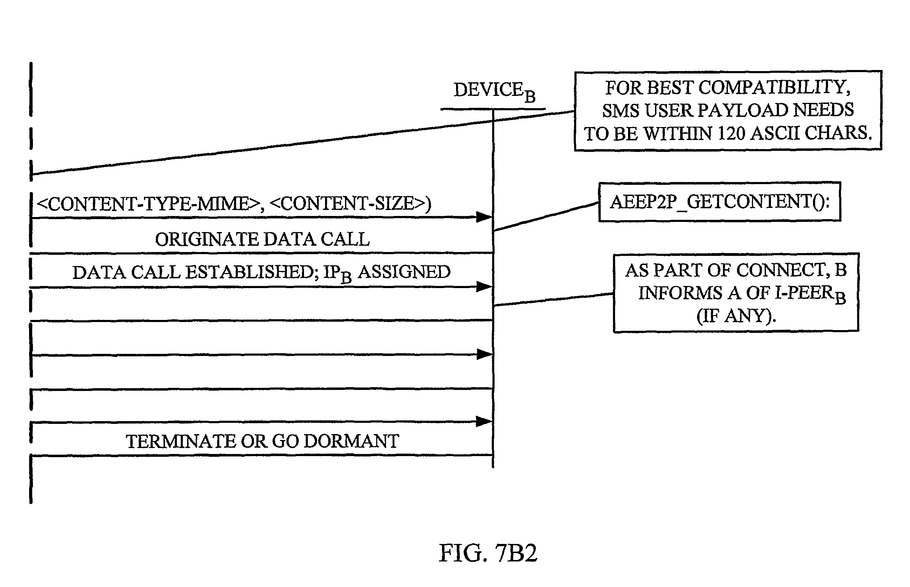

FIGs. 7b-7d illustrate an AMC basic call flow in a P2P architecture showing various aspects of sending data and receiving data.

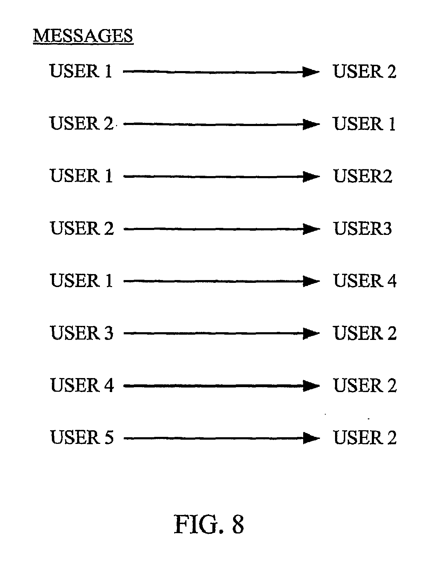

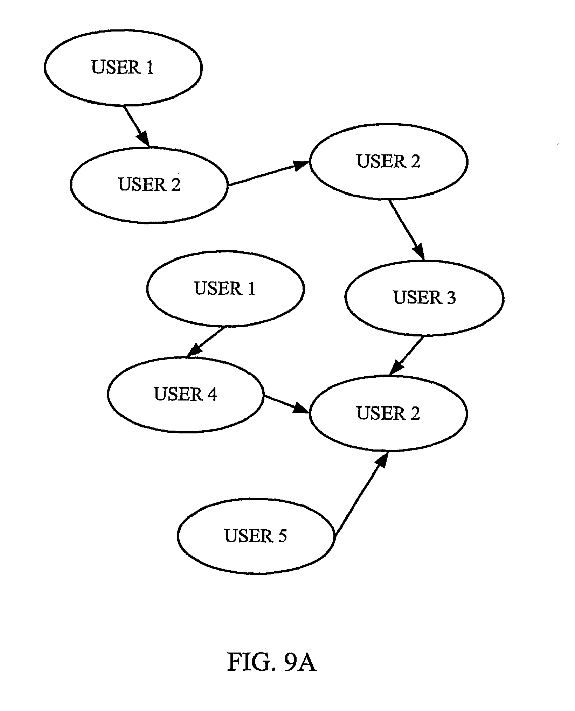

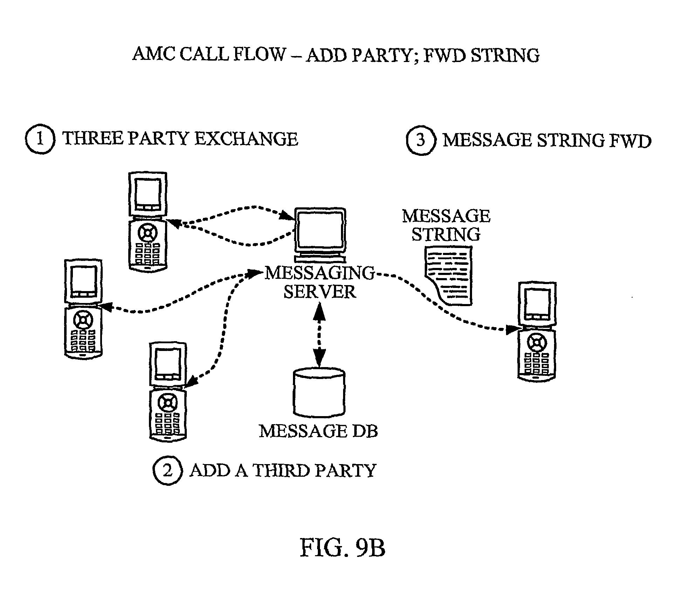

In addition, the AMC communication can be configured to support string management and indexing. AMC communication allows two or more users to share or view a string of conversations/messages. Because AMC messages are generated with metadata, the metadata allows users filter and/or index messages. For example, FIGS. 8 and 9a show example displays of how a string of messages from multiple users be indexed and shared. As shown, a new recipient can easily be brought up to point based on the indexing. It should be noted that the display may have various and different look and feel. Also, various information can be displayed, such as, but not limited to, the time of the message, the length of the message, type of message and priority. FIG. 9b illustrates an ANC call flow having a 3 party exchange with a message forwarded to a fourth party.

The ability to perform string management or threading of voice messages as described above allows AMC communication to support various other applications.

In one application, an audit trail may be created from a voice messaging communication string. It is important to carefully document activities in various enterprise settings. For example, in healthcare, documentation of activities such as treatments and orders are particularly relevant to healthcare privacy regulations such as HIPAA. However, many orders are given verbally or result from voice communication. With AMC communication, an audit or documentation trail may be generated from a voice messaging communication string. For example, in the healthcare industry, it may be configured to capture time, location, and entities receiving and/or exchanging patients and/or treatment related information. In another example, the audit trail may be used to keep track of inventory, orders and order status. In such case, the audit trail may be configured to capture time, location, and entities receiving and/or exchanging sale orders, quantity and/or type of items. The metadata associated with the AMC messages can be configured to manage the messages. A system having a "running loop" may be implemented in which voice messaging communication strings are stored. If at any time, a user wanted to create an audit trail, he/she would prompt the system for the creation of an audit trail.

Therefore, the system would allow the user to decide what conversation strings to save and which to allow to "evaporate" and not be traceable/discoverable. Conversation strings which the user determines at any point in the string can be saved. If not saved, the strings may be configured to be deleted. Alternatively, the conversation strings may be configured to be saved, unless the user at any point in the string determines to delete the string. The system may also allow users to delete all or parts of the audit trail.

In another application, an auto configuration of a mobile device may be implemented. In many enterprise settings, communications can be associated with a particular role, location, and timeframe rather than a specific individual. Therefore, the specific individuals are exchangeable. When specific individuals chance, it is possible for communications to be lost or not followed-up. However, the AMC communication implemented with a server allows a mobile phone to be auto configured and receive relevant information for a particular setting. Using the device location known by the network or entered by the user, the server may download to the mobile device the appropriate configuration and content relevant for that setting.

For example, in a hospital, when a doctor arrives for rounds, pending messages associated with the patients to be visited would be downloaded to the mobile device. When the doctors leaves the hospital and arrives at home, pending messages associated with his/her family may be downloaded. In another example, a nurse starting a shift would receive pending messages and/or relevant information for the patients he/she will be caring for. Accordingly, using the profile of a given user as triggered by the user's login into the network, the server may download the appropriate configuration and content relevant for that role.

Furthermore, embodiments may be implemented by hardware, software, firmware, middleware, microcode, or any combination thereof. When implemented in software, firmware, middleware or microcode, the program code or code segments to perform the necessary tasks may be stored in a machine readable medium. A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It should be apparent to those skilled in the art that the elements of mobile device 400, mobile device 500, server 600 and/or I-Peer 700 may be rearranged without affecting the operation of the AMC communication. Also, various elements of mobile device 400, mobile device 500, server 600 and/or I-Peer 700 may be combined without affecting the operation of the AMC communication. In addition, while voice AMC message has been used to describe some applications, the other audible messages including multimedia messages can be implemented without affecting the applications.

As described, the AMC conversation string may be one-to-one, or one-to-many, allowing users to avoid "telephone tag," and allowing users to respond when it is convenient, while choosing to save what they want, mid conversation string or at its end. Multicast recipients can be designated using phone numbers and i-peers can be used in an effort to minimize data traffic over the air. Groups can work together "on the go," each participant choosing when and how in various forms, to respond during a conversation string. New recipients can be added to the string "on the fly," and have access to a fully documented conversation string. Therefore, AMC messaging allows a powerful, yet a convenient tool for users to send voice or multimedia messages.

Finally, further details are presented as follows. In much of the description, reference is made to the healthcare industry. However, the healthcare industry is one example and the concept disclosed may be implemented in other applications. Therefore, it should be noted that the following description illustrate examples for the purposes of explanation. It would be apparent to those skilled in the art that the details can be modified and/or combined to achieve the concept of AMC messaging.

The foregoing described AMC messaging can implement security features through use of commonly know public/private key techniques. Short messaging service (SMS) messages may be used to receive public key for a recipient. Reliance can be placed on cellular authentication to act as a trust common middle entity.

It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.
According to as aspect of the present invention, there is provided a mobile device for asynchronous communication comprising:
a processing unit configured to generate an outgoing message with associated metadata indicating a priority level; and
a transmitting unit coupled to the processing unit and configured to transmit the outgoing message with the associated metadata to a destination corresponding to a phone number.
The device may further comprise:
a user interface configured to receive data, the priority level and the phone number;
wherein the processing unit uses the data to generate the outgoing message with the associated metadata.
The outgoing message may comprise either one or a combination of a voice message and multimedia.
The device may further comprise:
a receiving unit coupled the processing unit and configured to receive an incoming message with associated metadata; and
wherein the processing unit manages a conversation string formed by the outgoing and incoming message, based on the metadata.
According to an aspect of the present invention, there is provided a processor for asynchronous communication, wherein the processor is configured to control:
generation of an outgoing message with associated metadata indicating a priority level; and
transmission of the outgoing message with the associated metadata to a destination corresponding to a phone number.
The outgoing message may comprise either one or a combination of a voice message and multimedia.
The processor may be further configured to control:
receiving an incoming message with associated metadata; and
managing a conversation string based on the metadata, wherein the conversation string includes the outgoing and incoming message.
According to an aspect of the present invention, there is provided a mobile device for asynchronous communication comprising:
a receiving unit configured to receive a message alert with associated metadata indicating a priority level;
an output unit coupled to the storage unit and configured to play the message alert to give notification of an incoming message; and
a processing unit configured to control the play of the message alert, wherein the play is based on the associated metadata.
The processing unit may update the priority level based on a time period that has elapsed since the receipt of the message alert.
The output unit may comprise a display unit.
The display unit may display the message alert using one of a plurality of colors; and wherein the processing unit may control the one of the plurality of colors based on the priority level.
The display unit may display the message alert with status; and wherein the processing unit may control the status based on the metadata.
The status may comprise one of a pending status, an open status or a closed status.
The status may comprise a time period that has elapsed since the receipt of the message alert.
The receiving unit may receive the incoming message corresponding to the message alert, and wherein, the mobile device may further comprise:
a storage unit coupled to the receiving unit and configured to store the incoming message; and
a user interface configured to receive a user control signal, wherein the output unit is configured to play the message in response to the user control signal.
The incoming message may comprise either one or a combination of a voice message and multimedia.
The device may further comprising:
a transmitting unit configured to transmit an outgoing message with associated metadata, wherein the processing unit is further configured to manage a conversation string based on the metadata, wherein the conversation string includes the outgoing and incoming message.
The device may further comprise a transmitting unit configured to transmit a signal indicating whether the incoming message has been played.
The output unit may be further configured to play an additional message alert as a reminder of the incoming message.
According to an aspect of the present invention, there is provided a processor for asynchronous communication, wherein the processor is configured to control:
receiving of a message alert with associated metadata indicating a priority level; and
displaying of the message alert, wherein the display is based on the associated metadata.
The processor may be further configured to control:
updating of the priority level based on a time period that has elapsed since the receipt of the message alert.
The processor may be further configured to control displaying of the message alert using one of a plurality of colors based on the priority level.
The processor may be further configured to control:
displaying of the message alert with status based on the metadata.
The status may comprise one of a pending status, an open status or a closed status.
The status may comprise a time period that has elapsed since the receipt of the message alert.
The processor may be further configured to control:
receiving of an incoming message corresponding to the message alert.
The incoming message may comprise either one or a combination of a voice message and multimedia.
The processor may be further configured to control:
transmitting an outgoing message with associated metadata; and
managing a conversation string based on the metadata, wherein the conversation string includes the outgoing and incoming message.
The processor may be further configured to control:
a transmitting unit configured to transmit a signal indicating whether the incoming message has been played.
The processor may be further configured to control:
playing an additional message alert as a reminder of the incoming message.
According to an aspect of the present invention, there is provided a server for asynchronous media communication comprising:
a transceiver configured to receive a message with associated metadata indicating a priority level and destination;
a storage unit coupled to the transceiver and configured store the message; and a processing unit configured to generate a message alert corresponding to the message, wherein the transceiver is further configured to transmit the message alert to a destination.
The transceiver may be further configured to transmit the message with the associated metadata.
The transceiver may be further configured to transmit an additional message alert.
The processing unit may be further configured to manage a string of messages using associated metadata.
According to an aspect of the present invention, there is provided a processor for use in a server for asynchronous media communication, the processor configured to control:
receiving a message with associated metadata indicating a priority level and destination; storing the message; and
transmitting a message alert to a destination.
The processor may be further configured to control:
transmitting the message with the associated metadata.
The processor may be further configured to control:
transmitting an additional message alert.
The processor may be further configured to manage a string of messages using associated metadata.
According to an aspect of the present invention, there is provided a mobile device for asynchronous communication comprising:
a transmitting unit configured to transmit an outgoing message with associated metadata;
a receiving unit configured to receive an incoming message with associated metadata;
a processor configured to manage a conversation string based on the metadata, wherein the conversation string includes the outgoing and incoming messages.
The device may further comprise:
a display unit configured to display the conversation string.
The outgoing message may comprise either one or a combination of a voice message and multimedia.
Metadata may indicate a priority level.
The device may further comprise a an output unit configured to play a message alert to give notification of the incoming message; and wherein the processing unit may be configured to control the play of the message alert, wherein the play is based on the associated metadata.
According to an aspect of the present invention, there is provided a processor for asynchronous communication, the processor configured to control:
transmitting an outgoing message with associated metadata;
receiving an incoming message with associated metadata; and
managing a conversation string based on the metadata, wherein the conversation string includes the outgoing and incoming messages.
The processor may be further configured to control:
displaying the conversation string.
The outgoing message may comprise either one or a combination of a voice message and multimedia.
Metadata may indicate a priority level.
The processor may be further configured to control:
playing a message alert to give notification of the incoming message, wherein the play is based on the associated metadata.

## Claims

1. A mobile device for asynchronous media communication comprising:
a transceiver configured to receive a message with associated metadata indicating a priority level and destination point;
a storage unit coupled to the transceiver and configured store the message, wherein the transceiver is further configured to transmit a message alert to a destination when the destination point is within coverage.

2. The device of claim 1 wherein the transceiver is further configured to transmit the message with the associated metadata.

3. The device as in claim 1 wherein the processor is configured to manage a string of messages using associated metadata.

4. A processor for use in a mobile device for asynchronous media communication, the processor configured to control:
receiving a message with associated metadata indicating a priority level and destination point;
storing the message; and
transmitting a message alert to a destination when the destination point is within coverage.

5. The processor of claim 4 further configured to control:
transmitting the message with the associated metadata.

6. The processor as in claim 5 further configured to control:
transmitting an additional message alert.

7. The processor as in claim 4 further configured to manage a string of messages using associated metadata.

8. A method for asynchronous media communication, comprising the steps of:
receiving a message with associated metadata indicating a priority level and destination point;
storing the message; and
transmitting a message alert to a destination when the destination point is within coverage.

9. The method of claim 8 further comprising:
transmitting the message with the associated metadata.

10. The method as in claim 9 further comprising:
transmitting an additional message alert.

11. The method as in claim 8 further comprising:
managing a string of messages using associated metadata.
